# EUROPÄISCHE PATENTANMELDUNG

(11) **EP 4 394 300 A1**
(43) Veröffentlichungstag der Anmeldung: **03.07.2024**
(21) Anmeldenummer: 23218701.3
(22) Anmeldetag: 20.12.2023
(51) Int. Cl.: F27B 17/02, A61C 13/20, B22F 3/00, B22F 3/10, F27D 1/18

(54) **SINTEROFENEINSATZ MIT VAKUUMVERSCHLUSSRAHMEN**

(30) Priorität: 21.12.2022 DE 102022134353
(71) Anmelder: WDT-Wolz-Dental-Technik GmbH, 55566 Bad Sobernheim (DE)
(72) Erfinder: Wolz, Stefan, 55566 Bad Sobernheim (DE); SCHWAN, Axel, 69181 Leimen (DE)
(74) Vertreter: Götz, Gudrun Veronika

(57) **Zusammenfassung**

Die Erfindung betrifft einen Sinterofeneinsatz (100) zum sauerstofffreien Sintern von sinterbaren Materialien (201), insbesondere für die Dentaltechnik, aufweisend eine verschließbare Sinterkammer (110, 120) zur Ausbildung eines von einer Umgebung (200) abgeschlossenen Sinterraums (101) zur Aufnahme der sinterbaren Materialien (201) während des Sintervorgangs, wobei die Sinterkammer (110, 120) aufweist:
• einen Einlass (103) für die Begasung des Sinterraums (101) mit einem Schutzgas während des Sintervorgangs und mindestens einen ventilgesteuerten Auslass (102) für dessen Entgasung,
• ein erstes Kammerbauteil, insbesondere eine Sinterofenkammer (110), und ein zweites Kammerbauteil, insbesondere eine Tür (120),

Dabei sind in einem umlaufenden Verbindungsbereich (130) zwischen dem ersten Kammerbauteil (110) und dem zweiten Kammerbauteil (120) ein oder mehrere Aussparungen (131) angeordnet, wobei in der oder den Aussparungen (131) unabhängig vom Druck im Sinterraum (101) ein Unterdruck zur Bereitstellung einer Verschlusskraft erzeugt werden kann, um den Sinterraum (101) gegenüber der Umgebung (200) druckdicht und/oder fluiddicht zu verschließen.

## Beschreibung

Die Erfindung betrifft einen Sinterofeneinsatz zum sauerstofffreien Sintern von sinterbaren Materialien, insbesondere für die Dentaltechnik, aufweisend eine verschließbare Sinterkammer zur Ausbildung eines von einer Umgebung abgeschlossenen Sinterraums zur Aufnahme der sinterbaren Materialien während des Sintervorgangs, wobei die Sinterkammer einen Einlass für die Begasung des Sinterraums mit einem Schutzgas während des Sintervorgangs und mindestens einen, insbesondere steuerbaren, Auslass für dessen Entgasung, sowie ein erstes Kammerbauteil, insbesondere eine Sinterofenkammer, und ein zweites Kammerbauteil, insbesondere eine Tür, aufweist.

Sinteröfen sowie deren dazugehöriger Sinterprozess werden vor allem in der Pulvermetallurgie und in der Keramikindustrie eingesetzt. Bei der Herstellung von Sintergegenständen findet ein oberflächliches Zusammenwachsen von Materialkörnern durch Diffusion von Material an den Kontaktpunkten statt, wodurch ein fester Körper entsteht. Die Verschmelzung findet bei Temperaturen knapp unterhalb des Schmelzpunktes des jeweiligen Materials in einem Sinterofen statt.

Sinterbare Materialien sind auch mittels 3D-Druck herstellbar. Ausgangsmaterialien für die 3D-Drucksysteme zum Herstellen sinterbarer Materialien sind bspw. alle Pulver aus Metall, Metalllegierungen, Keramik und/oder Oxidkeramik, Glasfasern sowie Mischungen aus diesen Pulvern, welche entweder als Pulver oder Pulver und Bindemittel oder thermoplastische Filamente oder Pellets oder durch eine Suspension mit Bindemitteln vom 3D-Drucksystem verarbeitet werden können. Die Sinteröfen sollen diese gedruckten Bauteile auf die gewünschten physikalischen Parameter verdichten bzw. diese versintern. Ebenso sollen weitere thermische Behandlungen zur Steigerung der Bauteilquantität durchgeführt werden können. Zum Beispiel entstehen bei additiven Bauteilen mittels SLM (Selective Laser Melting) oder LMF (Laser Metal Fusion) Oxide in und auf den Bauteilen sowie bei der Herstellung Spannungen im Bauteil, die nur durch eine thermische Behandlung zu eliminieren sind.

Der Sintervorgang muss unter Ausschluss von Sauerstoff durchgeführt werden, um Verfärbung und Oxidation von zu sinternden Materialien zu verhindern.

Eine Möglichkeit besteht darin, in der Sinterkammer ein Vakuum zu erzeugen, wie es bspw. in der DE 102 48 506 A1 und der EP 2 703 760 A1 offenbart ist. Ein Vakuum allein kann jedoch die Anwesenheit von Restsauerstoff nicht völlig vermeiden. Es ist daher üblich bei der Herstellung von Sintergegenständen aus Metallpulver den Sintervorgang unter Schutzgasatmosphäre durchzuführen. Hierbei wird in der Regel Argon als billigstes Edelgas eingesetzt.

Die DE 43 02 570 C1 betrifft einen Brennofen mit einem Brennraum. Der Brennraum ist radial von einem Quarzglaszylinder, axial nach oben von einem Abschlussdeckel und axial nach unten durch eine Gehäuseverschlussplatte begrenzt. Der Brennraum ist von einer porösen Wärmeisolierung umgeben. Durch eine Schutzgaspumpe angetrieben werden die Schutzgase Stickstoff und Argon im System und durch den Brennraum zirkuliert. Die Schutzgaspumpe trägt nicht zu Abdichtung des Brennraums bei, sondern der durch die Schutzgaspumpe erzeugte Unterdruck öffnet den Brennraum gezielt, sodass die Schutzgasleitungen fluidleitend mit dem Brennraum verbunden sind.

Aus dem Stand der Technik, nämlich der WO 2013 / 053 950 A1 ist ein Sinterofeneinsatz bekannt, der einen Sinterraum mit einer Haube und einer Bodenplatte einschließt oder umgibt. Die Bodenplatte weist eine ringartig umlaufende Auflagefläche für die Haube auf, die sich am äußeren Rand der Bodenplatte befindet und die unvermeidbare Undichtigkeit hervorruft. Die Haube steht auf der Bodenplatte auf der dafür vorgesehenen Auflagefläche und umgibt auch einen Teil der Bodenplatte. In der Bodenplatte ist eine Schutzgaszufuhr und eine Schutzgasabfuhr vorgesehen, damit Argon in und aus dem Sinterraum strömen kann.

Um das Eindringen von Sauerstoff in den Sinterraum noch besser zu vermeiden, kann das Sinterverfahren bei Überdruck durchgeführt werden. In der DE 10 2011 056 211 B3 wird ein Verfahren bzw. ein Sinterofeneinsatz zum Sintern von Sintergut vorgeschlagen. Die Schale in der sich das Sintergut befindet, wird mittels eines Verschlusselements abgedeckt, wobei die abgedeckte Schale bei einem schwachen Überdruck von 1 mbar bis 25 mbar von Schutzgas bzw. Inertgas durchströmbar ist. Der maximal mögliche Überdruck ist durch das Gewicht der Haube begrenzt.

Auch in der WO 2013 / 167 289 A1 kann in einem Schutzraum eines Sinterofeneinsatzes, aufweisend ein Basisteil und eine Abdeckung, gegenüber dem Umgebungsdruck ein Überdruck durch Einführen des Schutzgases oder der Flüssigkeit in den Schutzraum erzeugt werden, wodurch Undichtigkeiten ausgeglichen werden können. Alternativ kann in dem Schutzraum gezielt eine Vakuumatmosphäre durch eine Vakuumpumpe erzeugt werden, während die Sinterkammer mit Schutzgas geflutet wird. Auch hier münden die mit der Pumpe verbundenen Leitungen direkt in den Sinterraum bzw. Schutzraum. Zur Verbesserung der Abdichtung sind die Dichtflächen zwischen Basisteil und Abdeckung durch Ausbildung einer Konizität vergrößert. Auch hier verbleibt der Nachteil, dass der mögliche Überdruck, bspw. 0,05 MPa, durch das Gewicht der Abdeckung begrenzt ist.

Sinterofeneinsätze für höhere Überdrücke wären derzeit im Stand der Technik aufwendig zu realisieren. So müssten teure hitzebeständige Legierungen für Kammern ausgewählt werden, welche mit schweren Türen, bspw. Panzertüren, verschlossen werden müssen. Die WO 2019 / 240 584 A1 betrifft einen Produktträger für ein Presssinterverfahren. Die Sinterkammer des Sinterofeneinsatzes wird gegenüber der Umgebung durch eine vakuumierte Haltenut abgedichtet, wobei Sinterkammer und Haltenut durch eine flexible Folie abgedeckt werden. Mit dieser Anordnung sind Sinterverfahren mit Spülgas bei einem Überdruck und Temperaturen von lediglich 250°C bis 300°C möglich.

Beim Sintern mit höheren Temperaturen sind aufwendige und teure Bauteile erforderlich, die zudem zu einer starken Steigerung der Energiekosten beitragen. So müssen im Stand der Technik die Dichtungen aufwändig gekühlt werden, um die Dichtwirkung während des Sintervorgangs zu erhalten.

Es ist die Aufgabe der vorliegenden Erfindung, die Nachteile aus dem Stand der Technik zu eliminieren und einen Sinterofeneinsatz zu schaffen, der auch bei einer hohen Druckdifferenz zwischen Sinterraum und Umgebung und hohen Temperaturen möglichst gasdicht ist, ohne dass aufwendige mechanische, hitzebeständige bzw. dem Verschleiß ausgesetzte Bauteile verwendet werden müssen.

Die Aufgabe wird gelöst durch einen Sinterofeneinsatz gemäß Anspruch 1. Weitere optionale Merkmale und Merkmalskombinationen sind in den Unteransprüchen und der Patentbeschreibung offenbart.

Die Erfindung der eingangs genannten Art kennzeichnet sich dadurch, dass in einem umlaufenden Verbindungsbereich zwischen dem ersten Kammerbauteil und dem zweiten Kammerbauteil ein oder mehrere Aussparungen angeordnet sind, wobei unabhängig vom Druck im Sinterraum in der oder den Aussparungen ein Unterdruck zur Bereitstellung einer Verschlusskraft erzeugt werden kann, um den Sinterraum gegenüber der Umgebung druckdicht und/oder fluiddicht zu verschließen.

Mit den erfindungsgemäßen Sinterofeneinsätzen können Bauteile, welche mit einem 3D-Drucksystem für sinterbare Materialen hergestellt worden sind, auf die gewünschten physikalischen Parameter verdichtet bzw. versintert werden. Des Weiteren können mit diesem Sinterofeneinsatz thermische Behandlungen bei Temperaturen zwischen 500°C und 3250°C zur Steigerung der Bauteilquantität durchgeführt werden.

Unter einem druckdichten Verschluss versteht man allgemein eine Dichtigkeit bzgl. Gas, Flüssigkeit oder allgemein einem Fluid bei definierten Betriebsdrücken. In der Regel weist das erste Kammerbauteil eine Öffnung auf, die durch ein zweites Kammerbauteil, bspw. eine Tür oder eine Bodenplatte, verschlossen werden kann. Umlaufend heißt, dass die Aussparung oder die Aussparungen, auch Segmentaussparungen genannt, entlang des Randes oder Rahmens oder der Umrandung dieser Öffnung des ersten Kammerbauteils angeordnet sind, vorzugsweise in regelmäßigen Abständen. Die Erfindung stellt damit einen Unterdruck- oder Vakuumverschlussrahmen dar. Das erste Kammerbauteil und das zweite Kammerbauteil sind vorzugsweise mit demselben Material hergestellt. Unter Unterdruck zum Bereitstellen der Verschlusskraft können bspw. Betriebsdrücke von 0,005 - 1 mbar gewählt werden. Insbesondere kann Unterdruck im Sinne dieser Anmeldung durch "Vakuum" ersetzt werden, sodass bspw. von einem Vakuum und damit von einer Vakuumaussparung gesprochen werden kann. Die Erfindung stellt damit einen Unterdruck- oder Vakuumverschlussrahmen dar. Durch den Unterdruck wird eine Anzugskraft erzeugt, die als Verschlusskraft dient, welche die Kammerbauteile aneinander presst und den Sinterraum gegenüber der Umgebung druckdicht bzw. gasdicht verschließt. Der Unterdruck in den Aussparungen wird bspw. mittels eines Absolutdrucksensors gemessen. Durch diesen Drucksensor lässt sich die Anpresskraft des zweiten Kammerbauteils und damit die Verschlusskraft ermitteln. Steigt bspw. der gemessene Absolutdruck während des Sintervorgangs an, so lässt dies auf Undichtigkeiten zwischen den Aussparungen und der Umgebung bzw. des Sinterraums schlie-ßen. In diesem Fall kann der Verdichter zum Bereitstellen der Verschlusskraft, insbesondere der erste Verdichter, nachgeregelt werden, um die Verschlusskraft wieder zu erhöhen.

Der Unterdruck in den Aussparungen wird unabhängig vom Druck im Sinterraum bereitgestellt. Das heißt, Verfahren im Sinterraum können allgemein sowohl bei Unterdruck als auch bei Überdruck durchgeführt werden, wodurch die Verwendbarkeit der Sinterkammer erhöht werden kann. Daher ist es auch möglich, in einem Standardofen, welcher mit einem erfindungsgemäßen Sinterofeneinsatz ausgestattet wird, eine sauerstofffreie Sinterung, sowie eine Sinterung unter allen dem Fachmann bekannten Gasen und Gasmischungen, wie z.B. Argon, Stickstoff, Wasserstoff, Helium usw., auch bei einem Druck von 0,001 MPa (0,01 Bar) bis 200 MPa (2000 Bar) durchzuführen. Zu Regulierung des Drucks im Sinterraum weist die Sinterkammer weitere Anschlüsse auf, sodass der Betriebsdruck im Sinterraum je nach Bedarf erhöht oder verringert werden kann. Des Weiteren haben die Sinterkammern mindestens einen Anschluss für die Begasung für die mindestens eine Sinterofenkammer und mindestens einen Anschluss für die Entgasung der Sinterofenkammer. Sobald der durch die Aussparung oder Aussparungen definierte Zwischenraum belüftet und der Unterdruck aufgehoben wird, lässt sich das erste Kammerbauteil vom zweite Kammerbauteil trennen und der Sinterraum wird zugänglich.

Zweckmäßig ist der Verbindungsbereich vom Sinterraum baulich getrennt, sodass durch die Bereitstellung des Unterdrucks in der oder den Aussparungen, der Sinterraum gegenüber der oder den Aussparungen und der Umgebung druckdicht und/oder fluiddicht getrennt ist.

Der Verbindungsbereich zwischen den Kammerbauteilen umfasst dabei vorzugsweise mindestens die Ausnehmung(en), an die Ausnehmungen angrenzenden Planflächen, Dichtflächen oder sonstigen Dichtungseinrichtungen und Anschlüsse oder Mündungen für die mindestens eine Unterdruckleitung.

In einer bevorzugten Ausführungsform der Erfindung sind die Aussparung oder die Aussparungen zum Erzeugen, Aufrechterhalten oder Lösen der Verschlusskraft über einen oder mehrere Unterdruckanschlüsse fluidleitend mit einem ersten Verdichter, insbesondere einem Vakuumverdichter oder einer Vakuumpumpe, zum Bereitstellen des Unterdrucks in der oder den Aussparungen verbunden.

In anderen Worten sind die Aussparung oder die Aussparungen zum Erzeugen, Aufrechterhalten oder Lösen der Verschlusskraft über einen oder mehrere Unterdruckanschlüsse durch eine oder mehrere Unterdruckleitungen fluidleitend mit einem ersten Verdichter, insbesondere einem Vakuumverdichter oder Vakuumpumpe, zum Bereitstellen des Unterdrucks in der oder den Aussparungen verbunden, wobei die Unterdruckleitungen im Bereich von einem oder mehrerer Unterdruckanschlüsse in den Verbindungsbereich, insbesondere in der einen oder den mehreren Aussparungen des Verbindungsbereichs, mündet.

Nach dem Anlegen des ersten Kammerbauteils an das zweite Kammerbauteil wird jede abgeschlossen ausgebildete und an der Ausbildung der Verschlusskraft beteiligte Aussparung des Verbindungsbereichs über einen Unterdruckanschluss an einen Verdichter angeschlossen. Eine Aussparung weist also in einer Boden- oder Seitenwandung als Unterdruckanschluss eine Ansaugöffnung auf, über welche Luft bzw. Gas aus der Aussparung angesaugt werden kann. Der Unterdruckanschluss ist die Ansaugöffnung oder Mündung einer Unterdruckleitung, die, vorzugsweise mittelbar über Schlauchverbindungen, mit einem Verdichter verbunden ist. Die Unterdruckleitung mit Anschluss an die Aussparungen ist dabei einstückig mit dem ersten Kammerbauteil ausgebildet. Weitere Aufgaben des Unterdruckkanals bzw. der Unterdruckleitung umfassen die Dichtigkeitsprüfung vor Beginn des Sintervorgangs, sowie die Absaugung von aus der Umgebung eindringender Luft und von aus dem Sinterraum austretendem Abgas oder Schutzgas.

Vorzugsweise ist der Sinterraum zur Bereitstellung eines Überdrucks und/oder Unterdrucks im Sinterraum mit einem zweiten Verdichter, insbesondere einer Schutzgaspumpe, oder sonstigen Überdruckeinheit, bspw. einer Gasflasche, zum Einleiten eines Schutzgases in den Sinterraum verbunden oder verbindbar, wobei eine Schutzgasleitung den zweiten Verdichter oder die sonstige Überdruckeinheit mit dem Einlass des Sinterraums verbindet.

Die Unterdruckleitung und die Schutzgasleitungen sind baulich voneinander getrennt ausgebildet, insbesondere einstückig mit einem oder beiden Kammerbauteilen ausgebildet. In der Regel befördern die Leitungen verschiedene Gase mit thermodynamisch verschiedenen Parametern.

Vorzugsweise sind die Aussparung oder die Aussparungen zur Ausbildung eines umlaufenden Unterdruckkanals oder einer umlaufenden Unterdruckleitung miteinander verbunden, wobei darin der Unterdruck zum Bereitstellen der Verschlusskraft erzeugt wird.

Die Aussparung bzw. die Aussparungen sind dem ersten Kammerbauteil oder dem zweiten Kammerbauteil oder dem ersten und zusätzlich dem zweiten Kammerbauteil zugeordnet. Der Unterdruck, welcher in der Nut und/oder den Aussparungen erzeugt wird, hat zur Folge, dass die Tür die Sinterkammer sowohl gasdicht als auch druckdicht verschließt. Überraschenderweise bleibt der Unterdruck auch bei höheren Temperaturen unverändert erhalten. Durch die Realisierung der Verschlusskraft mit einer einzigen umlaufenden Aussparung kann eine gleichmäßige Verschlusskraft über den gesamten Verbindungsbereich verteilt erreicht werden.

Besonders einfach und damit kostengünstig herzustellen ist der erfindungsgemäße Verbindungsbereich, wenn der umlaufende Kanal oder die umlaufende Leitung mit einer oder zwei oder mehr umlaufenden Nuten gebildet ist.

Das erste Kammerbauteil oder das zweite Kammerbauteil oder das erste und das zweite Kammerbauteil können mindestens eine entsprechende umlaufende Nut aufweisen. Im Falle von einer Nut entsteht der umlaufende Kanal bzw. die umlaufende Leitung, indem die Öffnung der Nut in einem Kammerbauteil, bspw. dem ersten Kammerbauteil, von dem anderen Kammerbauteil, bspw. dem zweiten Kammerbauteil, abgedeckt wird. Insbesondere dann können der Unterdruckkanal oder die Unterdruckleitung vereinfacht als Unterdrucknut oder auch Vakuumnut bezeichnet werden. Im Falle von zwei Nuten können bei der Ausbildung des Unterdruckkanals bzw. der -leitung die Öffnungen der Nuten kongruent übereinandergelegt werden. Ein erfindungsgemäßes Verschlusssystem kann je nach Auslegung der Nut eine Verschlusskraft von 1kg bis 2.000 kg erzeugen und dies ohne, dass die Ofenkonstruktion diesen Druck mit mechanischen Bauteilen ausgleichen muss. Je breiter die Nut, desto mehr Verschlusskraft kann bei demselben Unterdruck aufgebracht werden. Eine entlang eines Rechteckrahmens (Rechteckaußenmaße = 18x13cm) umlaufende Nut mit einer Breite von 2 cm kann bei einem 100%-Vakuum eine Verschlusskraft von 58 kg und einem 90%-Vakuum mit 100 mbar eine Verschlusskraft von 52,2 kg erzeugen. Diese Verschlusskraft kann aus Sicherheitsgründen bei der Auslegung nochmal halbiert werden. Eine umlaufende Nut kann über ihre gesamte Länge die gleiche Breite aufweisen. Alternativ kann die Breite der umlaufenden Nut über ihre Länge, insbesondere in Eckbereichen oder im Bereich von Schutzgasleitungen, Unterdruckleitungen und/oder Unterdruckanschlüssen variieren.

In einer optionalen aber besonders vorteilhaften Ausführungsform der Erfindung ist der Verbindungsbereich des ersten Kammerbauteils mit dem zweiten Kammerbauteil mittels Formschluss ausgebildet.

Der Formschluss entsteht durch Versperren der relativen Bewegung zweier Bauteile durch konstruktive Details. Der Formschluss kann Bewegungen in eine oder mehrere Richtungen sperren. Der Formschluss hier entsteht durch Versperren der Bewegung senkrecht zu den Planflächen, also den Dichtflächen oder Kontaktflächen, der Kammerbauteile.

Besonders einfach realisiert wird der Formschluss, wenn der Verbindungsbereich durch eine dem ersten Kammerbauteil zugeordnete und eine dem zweiten Kammerbauteil zugeordnete ebene, insbesondere plangeschliffene und/oder geläppte, Planfläche gebildet ist, wobei die Planflächen unter Ausbildung des Formschlusses beim Erzeugen des Unterdrucks die Sinterkammer gegenüber der Umgebung druckdicht und/oder fluiddicht verschließen können.

Läppen ist allgemein ein spanabhebendes maschinelles, gegebenenfalls auch von Hand ausgeübtes, zeitbestimmtes Fertigungsverfahren zur Glättung von Oberflächen oder zum Abtrennen von Werkstückteilen bei Einhaltung enger Toleranzen.

Um vor dem Erzeugen des Unterdrucks in dem Vakuumkanal die Kammerbauteile in die richtige Position zu bringen, sind das erste Kammerbauteil und das zweite Kammerbauteil gegen ein unbeabsichtigtes Verrutschen oder Verdrehen zueinander durch eine Zentrier- oder Arretiereinrichtung im Verbindungsbereich gesichert.

Die Zentrier- oder Arretiereinrichtung kann bspw. mit zwei oder mehr Zapfen oder Bolzen gebildet werden, die lösbar mit der Sinterkammer verbunden oder verbindbar sind.

Durch die lösbare Ausbildung der Arretiereinrichtung können die Planflächen freigelegt werden. Somit sind die Planflächen leicht zugänglich zum Nachschleifen. Damit kann die Dichtwirkung des Verbindungsbereichs erhöht werden, womit die Wartungsfähigkeit des Sintereinsatzes verbessert wird.

Vorzugsweise sind die Zentrier- oder Arretiereinrichtung mit zwei oder mehr Zapfen oder Bolzen gebildet, wobei die Bolzen oder Zapfen einen Konus oder Doppelkonus aufweisen.

Noch wartungsfreundlicher wird insbesondere das zweite Kammerbauteil bzw. die Sinterofentür, wenn die Zentrier- oder Arretiereinrichtung mindestens eine Aufstandsfläche zum Aufsetzen eines Kammerbauteils aufweist, deren Geometrie und Anordnung derart angepasst ist, dass beim Anlegen oder Aufstellen eines Kammerbauteils der Sinterraum und die Aussparungen gegenüber der Umgebung bedeckt oder abgedeckt sind.

Die Aufstandsfläche ist bspw. als obere Auflagewandung eines Standfußes des Sinterofeneinsatzes ausgebildet, der im Bereich des Flansches des ersten Kammerbauteils einen Vorsprung aufweist, sodass der Standfuß gegenüber der Planfläche des Flansches einen Überstand aufweist. Der Überstand des Vorsprungs weist eine ebene Aufstandsfläche auf, auf welcher eine untere Wandung des zweiten Kammerbauteils abgestellt werden kann. Zweckmäßig weisen mindestens zwei Standfüße eine entsprechende Aufstandsfläche auf, damit das zweite Kammerbauteil sicher abgestellt und damit provisorisch abgestellt und zentriert werden kann. Geometrie und Anordnung der Aufstandsfläche und des zweiten Kammerbauteils sind so aufeinander abgestimmt, dass das zweite Kammerbauteil sowohl den Sinterraum als auch die Aussparungen des Verbindungsbereichs vollständig bedeckt und bei Anwendung des Unterdrucks im Verbindungsbereich den Sinterraum gegenüber den Aussparungen und der Umgebung und die Aussparungen gegenüber dem Sinterraum und der Umgebung druckdicht bzw. fluiddicht verschließt. Die Standfüße der Arretier- oder Zentriereinrichtung können auch lösbar mit dem ersten Kammerbauteil ausgebildet werden, damit auch die Planfläche des ersten Kammerbauteils leichter nachgeschliffen werden kann.

Um die Verweilzeit des Schutzgases und es durch die Sinterung entstehenden Abgases im Sinterraum zu erhöhen, ist zweckmäßig vorgesehen, dass der mindestens eine Einlass für die Begasung des Sinterraums und der mindestens eine Auslass für dessen Entgasung an oder in demselben Kammerbauteil angeordnet oder anordenbar sind.

Für manche Sinterprozesse, bspw. das Sintern von Stählen, ist es von Vorteil, wenn das Sintergut dem eigenen Abgas ausgesetzt ist. Dafür ist es zweckmäßig, wenn eine Durchströmung des Sinterraumes mit Schutzgas vermieden wird, sodass das Abgas länger im Sinterraum verweilen kann. Es ist dann von Vorteil, wenn ein Kammerbauteil, insbesondere ein zweites Kammerbauteil oder eine Tür verwendet wird, die sowohl den Schutzgaseinlass als auch den Schutzgasauslass aufweist.

Um die Verweilzeit des Schutzgases und es durch die Sinterung entstehenden Abgases im Sinterraum zu verringern, ist zweckmäßig vorgesehen, dass mindestens ein Einlass für die Begasung des Sinterraums und mindestens ein Auslass für dessen Entgasung an oder in verschiedenen Kammerbauteilen angeordnet oder anordenbar sind.

Für manche Sinterprozesse ist es von Vorteil, wenn das Sintergut möglichst nicht dem eigenen Abgas ausgesetzt ist. Dafür ist es zweckmäßig, wenn eine Durchströmung des Sinterraumes mit Schutzgas erreicht wird, sodass das Abgas rasch aus dem Sinterraum ausgeleitet wird. Es ist dann von Vorteil, wenn der mit dem zweiten Verdichter oder Schutzgasverdichter für den jeweiligen Prozess verbundene Schutzgaseinlass als auch der Schutzgasauslass möglichst voneinander beabstandet an verschiedenen Enden des Sinterraumes angeordnet sind. Optional können auch mehrere Einlässe oder Auslässe am Sinterofeneinsatz baulich vorgesehen sein, wobei die für die jeweilige Prozessführung benötigten Einlässe oder Auslässe verwendet werden, während die nicht benötigten Einlässe oder Auslässe verschlossen sind. Möglich ist auch die Verwendung verschiedener Sinterkammertüren die optional einen benötigten Schutzgasauslass aufweisen.

Für besonders sauerstoffempfindliches Sintergut eignet sich eine Sinterkammer, bei welcher der mindestens eine Einlass für die Begasung des Sinterraums und der mindestens eine Auslass für dessen Entgasung in einem oberen Bereich des Sinterraums oder oberhalb des zu sinternden Materials angeordnet oder anordenbar sind.

Möglich ist auch die Verwendung verschiedener Sinterkammertüren, welche den benötigten Schutzgaseinlass aber auch den -auslass aufweisen. Dies wäre bspw. bei vertikalen Huböfen der Fall, bei denen die Begasung sowie ein Vakuumanschluss in der Türplatte eingearbeitet sind. Der mindestens eine Auslass kann mindestens ein steuerbares Auslassventil, insbesondere ein abgasdruckgesteuertes Auslassventil, aufweisen. Selbst bei Verwendung von als "hochrein" gehandeltem Argon können restliche Sauerstoffmoleküle nicht völlig vermieden werden. Um den Kontakt von Sauerstoffatomen und dem zu sinternden Material besser zu vermeiden, muss die Schutzgasströmung oberhalb des zu sinternden Materials, also in einem oberen Bereich des Sinterraums platziert werden. Sauerstoffmoleküle sind leichter als Argonatome, weshalb als gewollter Effekt die Argonatome tendenziell absinken, während die Sauerstoffmoleküle oberhalb des Sinterguts verbleiben. Dadurch können die Sauerstoffmoleküle vor dem Absinken bereits wieder abgesaugt werden.

Für eine besonders gleichmäßige Begasung des Sinterraums mit Schutzgas ist der mindestens eine Einlass für die Begasung des Sinterraums vorzugsweise in dem zweiten Kammerbauteil realisiert.

Für eine besonders gleichmäßige Begasung des Sinterraums mit Schutzgas ist der mindestens eine Einlass für die Begasung des Sinterraums durch einen Verteilerkanal realisiert, dessen Seitenwandung eine Perforation für den Durchlass von Schutzgas in den Sinterraum aufweist. Durch die Perforation und die daraus resultierende Querschnittsverengung wird der Effekt einer Venturidüse erzeugt.

Vorzugsweise ist der mindestens eine Einlass in dem zweiten Kammerbauteil realisiert, während der mindestens eine Auslass aus dem Sinterraum in dem ersten Kammerbauteil realisiert ist. Dadurch wird eine Schutzgasströmung und damit eine gleichmäßige Verteilung über die gesamte Breite und über die gesamte Länge des Sinterraums sichergestellt.

Damit auch der Betrieb des Sintereinsatzes bei sehr hohen Temperaturen bis 3250° sicher ist, sind die Anschlussstutzen zum Begasen und Entgasen des Sinterraums, sowie der Anschlussstutzen zum Erzeugen des Unterdrucks in dem Vakuumkanal oder der Vakuumleitung mit einer Abstufung zur Montage eines Zwischenrohrs an den Leitungen ausgebildet, wobei im Bereich der Abstufung mindestens eine umlaufende ringartige Vertiefung für eine dichtende, retentive und dämmende Masse, insbesondere Keramikschlicker, angeordnet ist bzw. durch einen hitzebeständigen Kleber ausgefüllt werden kann.

Am kostengünstigsten lässt sich der Sinterofeneinsatz herstellen, wenn das erste Kammerbauteil als Sinterofenkammer den verschließbaren Sinterraum definiert und das zweite Kammerbauteil als Ofenkammertür oder Tür zum Verschließen des Sinterraums ausgebildet ist.

Die Sinterofenkammer definiert einen näherungsweise quaderförmigen Sinterraum und ist zu einer Stirnseite dieses Quaders hin geöffnet. Im Bereich der geöffneten Stirnseite ist ein umlaufender Rahmen oder Flansch angeordnet, der die Planfläche zum Ausbilden des Verbindungsbereichs aufweist. Die Ofenkammertür ist näherungsweise plattenförmig und zum Verschluss der offenen Stirnseite des Quaders ausgebildet. Zum Ausbilden des Verbindungsbereichs und damit des Unterdruck- bzw. Vakuumverschlussrahmens weist die Ofenkammertür eine Planfläche auf, die druckdichtend bzw. fluiddichtend mit der Planfläche der Sinterofenkammer schließen kann. Beide Kammerbauteile sind mit gasdichten und hitzebeständigen Materialien gebildet. Die Planfläche der Tür ist als umlaufender Vorsprung der Tür ausgebildet. Dadurch muss beim Nachschleifen der Planflächen zum Nachbessern der Dichtigkeit nicht die gesamte Innenseite der Tür nachgeschliffen werden. Ebenso können Türen einfach ausgetauscht werden um, bindemittel- und sintermaterialbezogen Gasströmungen zu optimieren, sowie einen stärkeren oder schwächeren Venturieffekt zu erzeugen. Alternativ können erfindungsgemäß der Sinterraum auch durch Haube und Bodenplatte begrenzt werden. Sinterofenkammern mit Tür sind jedoch kostengünstiger herzustellen und konstruktionsbedingt weniger undicht gegenüber Überdruck im Sinterraum.

Einen entwicklungsraffenden Sprung stellt dar, das erste Kammerbauteil und das zweite Kammerbauteil mittels 3D-Druckverfahren herzustellen.

Erst die Herstellung der Sinterkammer mittels 3D-Druck ermöglicht überhaupt die Herstellung einer Sinterkammer in der erforderlichen Genauigkeit und Komplexität für die Verfahren unter Hochdruck und Hochtemperatur. Ein alternatives Fertigungsverfahren zu 3D-Druck ist nicht oder nur mit hohem Zusatzaufwand möglich. Prinzipiell möglich ist das 3D-Druckverfahren mit der Verwendung von Materialien, wie Aluminiumoxid, yttriumstabilisiertes Zirkonoxid (YSZ), Quarzglas, Stahllegierungen, Wolfram oder Wolframlegierungen. Yttriumstabilisiertes Zirkonoxid ist eine Keramik, bei der die kubische Kristallstruktur des Zirkoniumdioxids durch Zugabe von Yttriumoxid bei Raumtemperatur stabil gemacht wird. Quarzglas, auch als Kieselglas bezeichnet, ist ein Glas, das im Gegensatz zu den gebräuchlichen Gläsern keine Beimengungen von Natriumcarbonat oder Calciumoxid enthält, d. h. aus reinem Siliziumdioxid besteht.

Umfangreiche Versuche haben jedoch gezeigt, dass sich für das 3D-Druckverfahren die Verwendung von Siliciumcarbid besonders gut eignet.

Siliciumcarbid (SiC) ist eine zur Gruppe der Carbide gehörende chemische Verbindung aus Silicium und Kohlenstoff. Die technisch verwendeten Mengen werden im Allgemeinen synthetisch hergestellt.

Vorteilhaft ist, wenn das erste Kammerbauteil und das zweite Kammerbauteil aus einem glasinfiltrierten Material sind.

Ein mögliches Material ist sogenanntes siliciuminfiltriertes Siliciumcarbid (SiSiC), welches insbesondere SiC und metallisches Silicium umfasst und keine Restporosität besitzt. Durch die Verwendung glasinfiltrierter Materialien wird die Gasdichtigkeit der Materialien verbessert. Alternativ verwendet werden kann eine Pulverzusammensetzung, umfassend gesinterte Sintercarbidpartikel mit mindestens einer bimodalen Korngrößenverteilung, wobei gesinterte Sintercarbidpartikel eines ersten Modus eine D50-Partikelgröße von 25 µm bis 50 µm aufweisen und gesinterte Sintercarbidpartikel eines zweiten Modus einen D50 von kleiner als 10 µm aufweisen und die Pulverzusammensetzung eine scheinbare Dichte von 3,5 g/cm3 bis 8 g/cm3 aufweist. Diese Sintercarbidpartikel in den Bauteilen können dann in einem späteren Prozess entbindert sowie dichtgesintert werden, um die Vakuumverschlussrahmenkammer und Tür herzustellen. Zahlreiche Sinterdurchläufe haben die Einsatzmöglichkeit für Sinterkammern mit Tür und/oder Hauben-Systeme aus Siliciumcarbid bestätigt.

Die eingangs genannte technische Aufgabe wird ebenfalls gelöst durch einen Sinterofen mit einem Sinterofeneinsatz zum sauerstofffreien Sintern von sinterbaren Materialien in einer der zuvor beschriebenen Ausführungsformen. Die nachstehenden beschriebenen Merkmale, insbesondere Heizsystem, Kühlsystem, Abgasnachbehandlung, Messsysteme, Steuerung und Regelung, können auch als Bestandteil des Sinterofens realisiert sein, der dann mit dem Sinterofeneinsatz kombiniert wird.

Vorzugsweise ist in die Sinterkammer ein Heizsystem zum Heizen des Sinterraums und/oder des im Sinterraum angeordneten sinterbaren Materials integriert. Durch die Anordnung eines Heizsystems an der Außenwandung oder in der Begrenzungswandung der Sinterkammer können im Sinterraum Temperaturen bis 3250°C erzeugt werden.

Dabei können auch die Heizelemente oder Heizstäbe des Heizsystems mit Siliciumcarbid gebildet und einstückig mit der Sinterkammer ausgebildet sein. Alternativ kann das Heizsystem getrennt von der Sinterkammer herstellt und anschließend mit dieser zusammengefügt werden, bspw. mittels Schnüren, Platten, Stäben, Rohren, Rohrmanschetten und/oder Manschetten. Dies ermöglicht auch die Verwendung von induktiven oder mikrowellenbetriebenen Heizsystemen. Eine thermische Isolierung der Sinterkammer zur Umgebung hin durch geeignetes Isolationsmaterial stellt sicher, dass es weniger thermischen Verlust gibt. Gerade bei Temperaturen im Bereich von 3000°C muss innerhalb der Sinterkammer ein Wolframeinsatz quasi als innere Sinterkammer verwendet werden.

Für eine bessere Handhabung ist in die Sinterkammer ein Kühlsystem zum Abkühlen des Sinterraums und/oder des im Sinterraum angeordneten sinterbaren Materials integriert. Das Kühlsystem dient allgemein zum Abkühlen, insbesondere zum Härten, und Abschrecken des im Sinterraum angeordneten Materials. Das Kühlsystem kann damit zur Einstellung erforderlicher Materialeigenschaften des im Sinterraum angeordneten Materials oder wenigstens allgemein zur Prozessbeschleunigung dienen.

Vorzugsweise weist die Sinterkammer ein im Bereich mindestens eines Auslasses aus dem Sinterraum angeordnetes und ein durch einen Abgasdruck steuerbares Ventil auf. Das Ventil stellt sicher, dass bei Überdruck und gewünschter Abgasmenge Abgas aus der Sinterkammer temperaturgesteuert sowie zeitraumgesteuert ausgeleitet werden kann. Ebenso kann ein Sinterprozess auch temperatur- sowie zeitraum- sowie druckgesteuert bei geschlossenem Ventil durchgeführt werden.

Für eine verbesserte Abgasreinigung weist die Sinterkammer eine im Bereich eines Auslasses aus dem Sinterraum angeordnete Kühlfalle für Abgaskondensat auf. Vor einem Ventil, insbesondere dem bereits erwähnten Abgasventil, wird mindestens eine Kühlfalle für das entstehende Abgaskondensat angeschlossen. Je Abgasrohrauslass kann eine Kühlfalle angeordnet werden. In der Regel ist davon auszugehen, dass der Bereich vor dem Absperrventil kühler ist als der Sinterraum, weshalb Abgas auskondensieren kann.

Vor und/oder nach der Kühlfalle kann eine Abgasmesswertesonde einer Abgasleitung angeordnet sein, um den Prozess im Sinterraum, insbesondere einen Entbinderungsprozess zu überwachen. Durch das Einbauen der Abgassonde kann der Entbinderungsprozess ebenfalls temperaturgesteuert sowie zeitraumgesteuert sowie gasmengengesteuert überwacht und optimiert werden. Durch die vorherigen Daten der Bindemittelmenge und/oder Kaltgussformgewichte kann ein computergesteuertes Programm nun auch bezüglich der Entbinderungsprozesse alle Daten der Temperatursteuerung, Gas- und Menge- und Übergasdruckparameter (Überdruck, Unterdruck, Vakuum,...), Abgaswerte sowie Endsinterzeiten, Aufheizzeiten sowie Abkühlphasen berechnen, um sowohl die Qualität der Sinterbauteile zu optimieren als auch den benötigten Energie sowie Gasverbrauch zu ermitteln.

Ebenso kann die Sinterkammer eine im Bereich eines Auslasses aus dem Sinterraum angeordnete Nachverbrennung oder Reinigung für das aus dem Sinterraum ausgeleitete Abgas aufweisen.

Es können am Ende des Abgasrohres CO2-Filter oder sonstige Gasreinigungsvorrichtungen angeordnet sein, um eine Luftverschmutzung zu verhindern. Der Sinterraum der Sinterkammer kann für verschiedene Prozesse, bspw. pyrolytische Prozesse der organischen Bindemittel, verwendet werden, wobei pyrolytisches Gas entstehen kann. Die Gase entstehen z. B. bei MIM (Metal Injection Molding) oder bei 3D-Druck-Pulverbettsystemen, in denen organische Bindemittel im Einsatz sind oder 3D-Drucksystemen, die mit Filamenten oder Pellets additiv aufbauen. Durch eine Vielzahl von Versuchen wurde herausgefunden, dass es vorteilhaft ist, dass bei der Entbinderung und/oder der pyrolytischen Zersetzung von Kaltgussformen oder bei einer Verbrennung entstehenden Abgase in einer sauerstofffreien Atmosphäre (bzw. unter Stickstoff oder Argon) auch unter Druck zur Vergasung gebracht werden, um diese aus der Sinterkammer auszuleiten. Zudem haben sich bei einem solchen Sinterprogramm nicht vorhersehbar positive Eigenschaften auf die physikalischen Eigenschaften, insbesondere der metallischen Bauteile, ausgewirkt.

Um jeglichen Kontakt von Sauerstoffmolekülen und dem zu sinternden Material bestmöglich zu vermeiden, ist die Sinterkammer in eine äußere größere Sinterkammer und in eine innere kleinere Sinterkammer unterteilbar, wobei die äußere Sinterkammer und die innere Sinterkammer voneinander bezogen auf die Druckdichtigkeit bzw. Fluiddichtigkeit getrennt sind.

Um Kontakt von Sauerstoffmolekülen und dem zu sinternden Material noch besser zu vermeiden, kann die Flutung mit Schutzgas unterbrochen werden. Sauerstoffmoleküle sind leichter als Argonatome. Infolge der Unterbrechung des Schutzgasstroms kommt die Schutzgasatmosphäre im Sinterraum völlig zur Ruhe, sodass die Sauerstoffmoleküle nach oben steigen und sich im oberen Bereich des Sinterraums am ersten Kammerbauteil sammeln. Versuche haben gezeigt, dass eine Beruhigung der Schutzgasatmosphäre und damit die Schichtbildung im Sinterraum dann besonders gut gelingt, wenn um eine innere und kleinere Sinterkammer mit dem eigentlichen Sintervorgang eine äußere und größere Sinterkammer herum angeordnet wird. Um die innere Sinterkammer gegenüber der Umgebung noch besser abzuschirmen, ist es vorteilhaft, ein Anschluss zur Erzeugung eines Vakuums in der äußeren Sinterkammer vorzusehen, wobei die äußere Sinterkammer mit einer Haube und einem entsprechenden Bodenteil gebildet werden kann. Äußere Sinterkammer und innere Sinterkammer sind voneinander hinsichtlich des Druckausgleichs oder Fluidaustauschs vollständig trennbar. Dadurch kann die innere Sinterkammer mit dem zu sinternden Material auch thermisch besser isoliert werden. Insbesondere computergesteuert können durch eine solche doppelte Sinterkammer der Gasverbrauch und der Energieverbrauch weiter gesenkt werden. Weiterhin vorteilhaft ist die sehr einfache Möglichkeit der Einleitung von Kühlflüssigkeiten und Kühlgassen in die äußere Sinterkammer, ohne dass die zu sinternden Bauteilen in der inneren Sinterkammer in Kontakt mit der metallisch oberflächenschädigenden Kühlflüssigkeit oder billigen Kühlgasen geraten. Diese Kühlflüssigkeit oder billige Kühlgasse sind mit einem Kühlsystem verbunden das einen Kreislauf mit dem Sinterofeneinsatz eingehen kann und oder als Energiespeicher ausgelegt ist, um den Energieverbrauch weiter zu reduzieren. Dem Fachmann ist es ersichtlich, dass sich durch eine Programmierung der Einstellmöglichkeiten des Sinterofeneinsatzes neue Möglichkeiten ergeben. Im Rahmen eines Sinterprogramms können die physikalischen Eigenschaften der Sintermetallbauteile optimiert, Prozesszeiten verkürzt, unnötiger Energieverlust minimiert sowie teures Gas eingespart werden.

Ebenfalls gelöst wird die eingangs genannte technische Aufgabe durch die Verwendung eines Sinterofeneinsatzes zum sauerstofffreien Sintern von sinterbaren Materialien, insbesondere für die Dentaltechnik, in einer der bereits beschriebenen Ausführungsformen, in einem Sinterofen.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels *{bzw. -beispiele}* der Erfindung und den Zeichnungen. Diese zeigen in
- Fig. 1: eine beispielhafte erfindungsgemäße Sinterofenkammer eines ersten beispielhaftes Sinterofeneinsatzes in einer Frontalansicht, in
- Fig. 2: eine beispielhafte erfindungsgemäße Sinterkammertür des ersten beispielhaftes Sinterofeneinsatzes in einer Frontalansicht, in
- Fig. 3: die Sinterofenkammer des ersten Sinterofeneinsatzes aus Figur 1 in perspektivischer Darstellung, in
- Fig. 4: die Sinterkammertür des ersten Sinterofeneinsatzes aus Figur 2 in perspektivischer Darstellung, in
- Fig. 5: den ersten Sinterofeneinsatz in perspektivischer Darstellung, in
- Fig. 6: eine Detailansicht eines Anschlussstutzens mit Ringnut in perspektivischer Darstellung
- Fig. 7, 8: einen zweiten beispielhaften Sinterofeneinsatz in perspektivischer Darstellung, in
- Fig. 9: die Sinterofenkammer des zweiten beispielhaften Sinterofeneinsatz in perspektivischer Darstellung, in
- Fig. 10: den zweiten beispielhaften Sinterofeneinsatz in einer Draufsicht, in
- Fig.11-14: Schnittansichten A-A, B-B, C-C, D-D des zweiten beispielhaften Sinterofeneinsatz gemäß Fig. 10 und in
- Fig.15: einen dritten beispielhaften Sinterofeneinsatz in einer Explosionsdarstellung.

Die Figuren sind lediglich beispielhafter Natur und dienen nur dem Verständnis der Erfindung. Die gleichen Elemente sind mit denselben Bezugszeichen versehen.

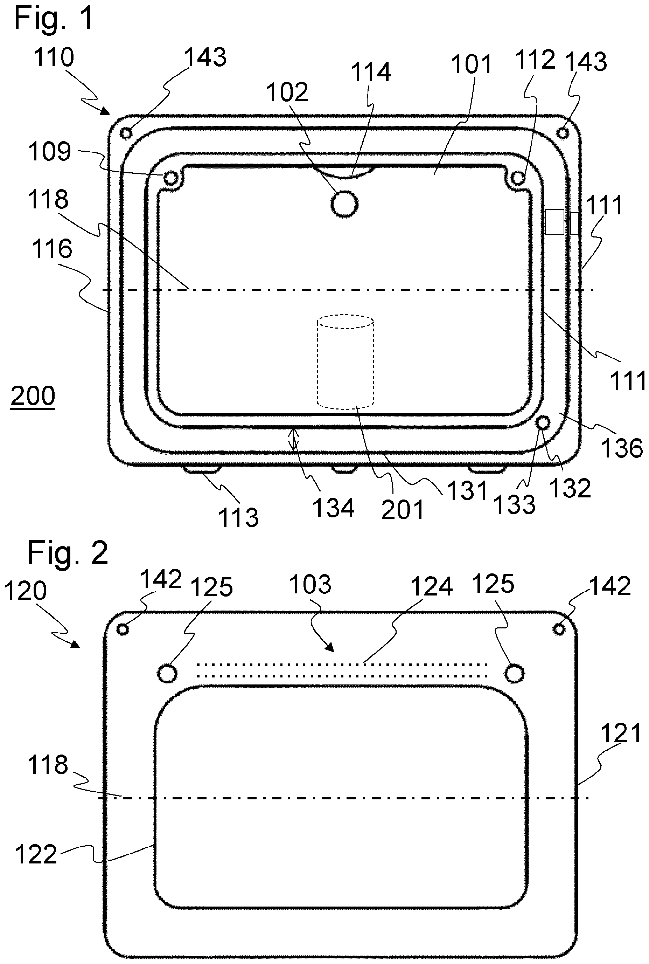

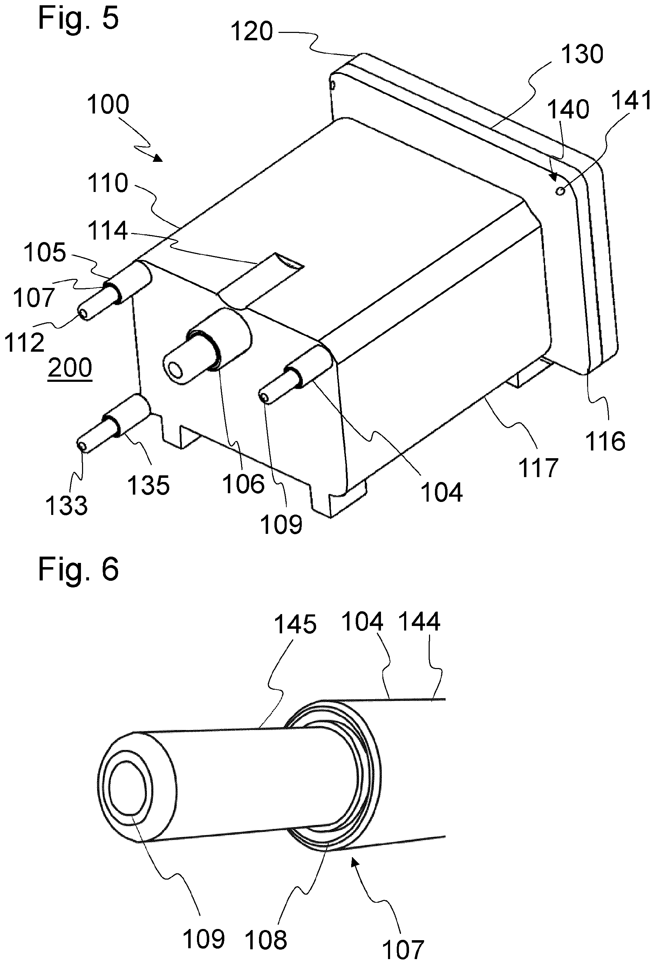

Figur 1 zeigt ein im weiteren Verlauf als Sinterofenkammer bezeichnetes erstes Kammerbauteil 110 eines Sintereinsatzes 100 (vgl. Figur 5). Die Sinterofenkammer 110 definiert den Sinterraum 101, in dem getrennt von der Umgebung 200 ein zu sinterndes Material 201 gesintert werden kann. Die Sinterofenkammer 110 ist hier quaderförmig ausgebildet und an einer Seite dieses Quaders 117 (vgl. Figur 5) offen, wobei die Öffnung von einer Umrandung oder einem Rahmen begrenzt ist, die hier als ein Flansch 116 ausgebildet ist. In diesem Flansch 116 ist eine, vorzugsweise mit einem U-förmigen Querschnitt ausgebildete, umlaufende Nut 131 angeordnet, wobei die umlaufende Nut 131 eine Breite 134 aufweist und von zwei Planflächen 111 begrenzt ist. Je größer die Breite 134, desto größer ist die Verschlusskraft, die mit demselben Unterdruck aufgebracht werden kann. Die Bodenwandung 136 der umlaufenden Nut 131 weist eine Öffnung als Unterdruckanschluss 132 auf, durch den aus dem durch die Nut 131 und die Tür 120 (vgl. Figur 2) begrenzten Hohlraum oder Zwischenraum Luft abgesaugt werden kann, um einen Unterdruck zu erzeugen, wobei mit diesem Unterdruck die Verschlusskraft realisiert ist. Der Unterdruckanschluss 132 mündet in eine Unterdruckleitung 133, die zum Ansaugen von Luft oder Gas mit einem Verdichter, insbesondere ersten Verdichter, verbunden ist. Für die Arretiereinrichtung 140 (vgl. Figur 5) weist die Sinterofenkammer 110 zwei Öffnungen 143 oder Aufnahmen auf, in welche Bolzen 141 lösbar eingesetzt werden können. Die Öffnungen 143 sind als Vertiefungen in den Planflächen 111 ausgebildet. Um die Planflächen 111 nachzuschleifen, können daher die Bolzen 141 von der Sinterofenkammer 110 getrennt werden. Das erste Kammerbauteil 110 weist ferner zwei Leitungen 109, 112 auf, durch welche Schutzgas für die Begasung des Sinterraums 101 mit Schutzgas geführt werden kann. Ebenso kann bspw. ein Einlass 112 auch als Auslass von Schutzgas aus dem Sinterraum 101 verwendet werden, um bspw. einen Venturieffekt im Sinterraum 101 zu erzeugen. Das Schutzgas wird dann hier durch einen Einlass 103 des zweiten Kammerbauteils 120 (vgl. Figur 2) in den Sinterraum 101 geleitet. Ebenso ist ein Auslass 102 zur Abfuhr von Gas allgemein und gegebenenfalls zusätzlich zur Erzeugung von Unterdruck und/oder Überdruck über ein Ventil (nicht dargestellt) im Sinterraum 101 angeordnet. Der Sinterraum 101 kann durch eine horizontal oder waagerecht ausgerichtete Mittelebene 118 in zwei näherungsweise gleichgroße Teilräume unterteilt werden. Der Einlass 103 für die Begasung des Sinterraums 101 (vgl. Fig. 2) und der Auslass 102 für dessen Entgasung sind in einem oberen Bereich des Sinterraums 101, d.h. oberhalb der Mittelebene 118 oder oberhalb des zu sinternden Materials 201 angeordnet.

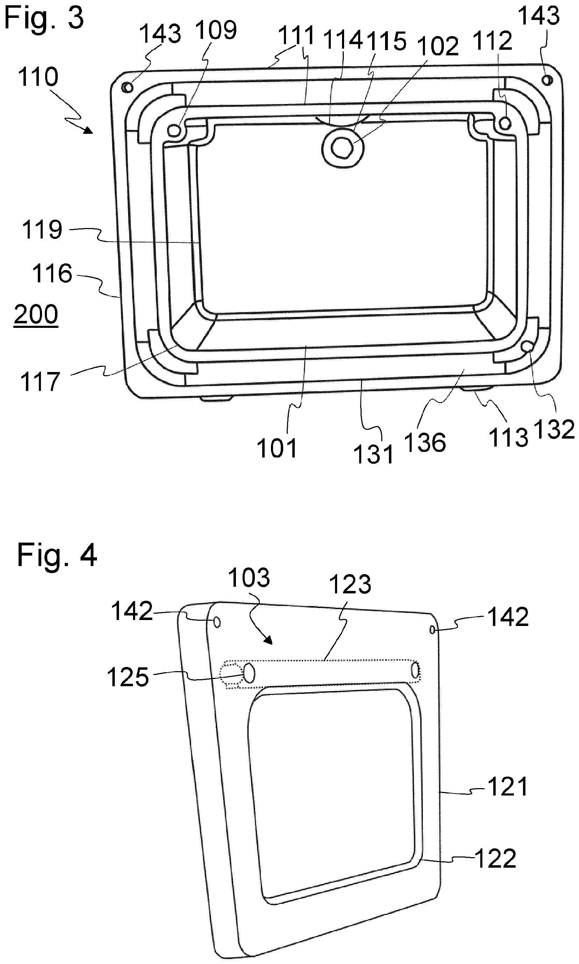

Fig. 2 zeigt ein im weiteren Verlauf als Sinterofenkammer bezeichnetes zweites Kammerbauteil 120 eines Sintereinsatzes 100 (vgl. Figur 5). Die Sinterkammertür 120 schließt zusammen mit der Sinterofenkammer 110 den durch die Sinterofenkammer 110 definierten Sinterraum 101 gegenüber der Umgebung 200 ab. Die Sinterofentür 120 ist hier näherungsweise als Platte ausgebildet, um die offene Seite des Quaders 117 (vgl. Fig. 5) abzudecken. Zu diesem Zweck wird die Tür 120 an den Flansch 116 angelegt, der als Umrandung die Öffnung begrenzt. Durch die Schutzgasleitungen 109 und 112 (wenn 112 nicht als Abgasleitung verwendet wird - vgl. Figur 1) kann der Einlass 103 in der Tür 120 gespeist werden. Der Einlass 103 in der Tür 120 für die Begasung des Sinterraums 101 ist durch einen Verteilerkanal 123 (vgl. Figur 4) realisiert. Der Verteilerkanal 123 verläuft näherungsweise waagrecht oder horizontal und seine Seitenwandung weist eine Perforation 124 für den Durchlass von Schutzgas aus dem Verteilerkanal 123 in den Sinterraum 101 auf. Für die Arretiereinrichtung 140 (vgl. Figur 5) weist die Tür zwei Öffnungen 142 oder Aufnahmen auf, in welche Bolzen 141 lösbar eingesetzt werden können. Die Öffnungen 142 sind als Vertiefungen in den Planflächen 121 ausgebildet. Um die Planflächen 121 nachzuschleifen, können daher die Bolzen 141 von der Sinterkammertür 120 getrennt werden. Die Bolzen 141 können z.B. aus Aluminiumoxid hergestellt werden, das mindestens einen doppelt so großen Wärmeausdehnungskoeffizienten wie Siliciumcarbid besitzt. Die entstehende Ausdehnung der Bolzen 141 kann dazu verwendet werden, die Verschlusskraft der Kammerbauteile 110, 120, bspw. in Zusammenwirken mit einem Bajonettverschluss, sowie mit Klammern mit wärmeausdehnenden Einlegeteilen, zu erhöhen.

Fig 3 und 4 entsprechen den Figuren 1 und 2 in perspektivischer Darstellung. Die Sinterofenkammer 110 definiert einen näherungsweise quaderförmigen Sinterraum 101 und ist zu einer Stirnseite dieses Quaders 117 hin geöffnet. Im Bereich der geöffneten Stirnseite ist ein umlaufender Flansch angeordnet, der die Planfläche 111 zum Ausbilden des Verbindungsbereichs 130 (vgl. Figur 5) aufweist. Der Auslass 102 ist an einer der Öffnung des Quader 117 gegenüberliegenden Rückwand 119 des Quaders 117 angeordnet, sodass der Quader 117 von dem Schutzgas über seine gesamte Länge durchströmt wird. Der Übergang zwischen der Rückwand 119 und dem Auslass 102 weist eine Fase 115 auf. Unterhalb bzw. an der Unterseite des Quaders 117 der Sinterofenkammer 110 sind Standfüße 113 angeordnet. In einem oberen Bereich bzw. im Bereich der Oberseite des Quaders 117 sind Zugänge 114 für Messeinrichtungen, bspw. Temperaturfühler angeordnet. Die Planflächen 111 der Sinterofenkammer 110 begrenzen zu beiden Seiten die umlaufende Nut 131. Dazu komplementär für den Formschluss ausgebildet sind die Planflächen 121 der Tür 120. Die Planflächen 121 der Tür 120 sind umlaufend, quasi als Vorsprung, um eine näherungsweise mittig angeordnete Vertiefung 122 angeordnet. Die Vertiefung 122 dient einerseits der Materialeinsparung. Andererseits verringert die Vertiefung 122 den Wartungsaufwand, da die Planfläche 121 verringert wird, die zum Nachbessern der Dichtigkeit nachgeschliffen werden muss. Der Verteilerkanal 123 des Einlasses 103 ist oberhalb der Vertiefung 122 angeordnet. Der Verteilerkanal 123 weist zu diesem Zweck zwei Zugänge 125 auf, welche an die Leitungen 109, 112 (vgl. Figur 1) fluiddichtend und druckdichtend anschließen. Wenn die Leitung 112 als Auslassleitung oder Ringleitung zum Auslass 102 geschaltet ist, dann ist einer der Zugänge 125 als Ausgang verwendet. Daher sind die Zugänge 125 als Öffnungen bzw. Vertiefungen in den Planflächen 121 ausgebildet.

Die Figur 5 zeigt einen Sinterofeneinsatz 100, hier eine Sinterkammer 110, 120 als Anordnung aus Sinterofenkammer 110 und Sinterkammertür 120. Während der gesamte Sinterofen (nicht dargestellt) in etwa die Größe eines haushaltsüblichen Backofens aufweisen kann, kann der Sinterofeneinsatz 100 in einem gedachten Quader angeordnet werden, der in etwa die Abmessungen 120 (Höhe)x200x200 Millimeter hat. Der Verbindungsbereich 130 zwischen dem Sinterofenkammer 110 und der Tür 120 ist durch einen Formschluss der ebenen, insbesondere geschliffenen und/oder geläppten, Planflächen 111, 121 (Vgl. Figuren 1 und 2) gebildet. Die Planflächen 111, 121 werden zur Ausbildung des Formschlusses Planfläche 111 an Planfläche 121 angelegt. Vor dem Erzeugen des Unterdrucks müssen Sinterofenkammer 110 und Sinterkammertür 120 durch eine Arretiereinrichtung 140 (vgl. Figur 5) in die vorgesehene Position gebracht werden, wobei die Arretiereinrichtung 140 im Bereich des Flansches 116 angeordnet ist. Die Bolzen 141 oder Zapfen der Arretiereinrichtung 140 durchsetzen die Öffnungen 142 und 143 des Sintereinsatzes 100. Auf der dem Flansch 116 gegenüberliegenden Seite des Quaders 117 sind Anschlussstutzen 104, 105 für die Begasung mit Schutzgas ausgebildet. Die Anschlussstutzen 104, 105 dienen der Speisung der Schutzgasleitungen 109, 112 (vgl. Figur 1) und damit des Einlasses 103 (vgl. Figur 2). Ebenso ist ein Anschlussstutzen 106 für die Entgasung von Abgas oder Schutzgas aus dem Sinterraum 101 durch den Auslass 102 (vgl. Figur 1) angeordnet. Ebenfalls angeordnet ist ein Anschlussstutzen 135 für ein Ansaugen von Luft oder Gas aus der verschlossenen Nut 131 (vgl. Figur 3) zum Verbinden mit dem ersten Verdichter zum Erzeugen der Verschlusskraft. Der Anschlussstutzen 104 für die Begasung dient zum Verbinden eines zweiten Schutzgasverdichters, Schutzgaspumpe oder einer sonstigen Überdruckeinheit. Alle Anschlussstutzen 104, 105, 106, 135 sind mit einer Abstufung 107 ausgebildet. Zwischen den Anschlussstutzen 105 und 106 bzw. zwischen dem Auslass 102 und der Leitung 112 kann eine fluidleitende Verbindung (nicht dargestellt) angeordnet sein. Damit kann Schutzgas quasi in einer Ringleitung zirkuliert werden.

Figur 6 zeigt die Detailansicht einer solchen Abstufung 107 am Beispiel des Anschlussstutzens 104. Zwischen einem ersten Abschnitt 144 mit größerem Durchmesser und einem zweiten Abschnitt 145 mit kleinerem Durchmesser ist eine Abstufung 107 mit einer Ringnut 108 vorgesehen, wobei die Ringnut 108 umlaufend um den zweiten Abschnitt 145 angeordnet ist. Die Ringnut 108 ist in axialer Richtung bzgl. der Rohrachse ausgerichtet und dient als Aufnahme für ein zweites Rohr (nicht dargestellt), bspw. ein Aluminiumoxidrohr, und eine dichtende und dämmende Masse, insbesondere Keramikschlicker (nicht dargestellt). Aluminiumoxid erfährt in der Regel eine größere Wärmeausdehnung als das Material der Sinterkammer, wodurch im Betrieb das Aluminiumoxidrohr in der ringförmigen Vertiefung 108 im Bereich der Abstufung 107 quasi eine Klemmverbindung ausbilden kann. Zusätzlich kann im Bereich des zweiten Abschnitts 145 eine umlaufende in radialer Richtung geöffnete Nut vorgesehen sein (nicht dargestellt), in die ein komplementärer Vorsprung an der Innenwand des zweiten Rohres einhaken oder einrasten kann. Das so befestigte Aluminiumrohr dient quasi als thermischer Adapter, um die gegebenenfalls sehr hohen Temperaturen im Sinterraum zu puffern. Versuche haben gezeigt, dass bereits nach einer Rohrlänge von 15-17 cm die Temperaturen auf 70°C abgekühlt sind. Ab dann können die weiteren Leitungen durch Kunststoffschläuche realisiert werden, sowie Ventile an allen Zu- und Ableitungen für eine prozessgesteuerte Schaltung angesteuert werden.

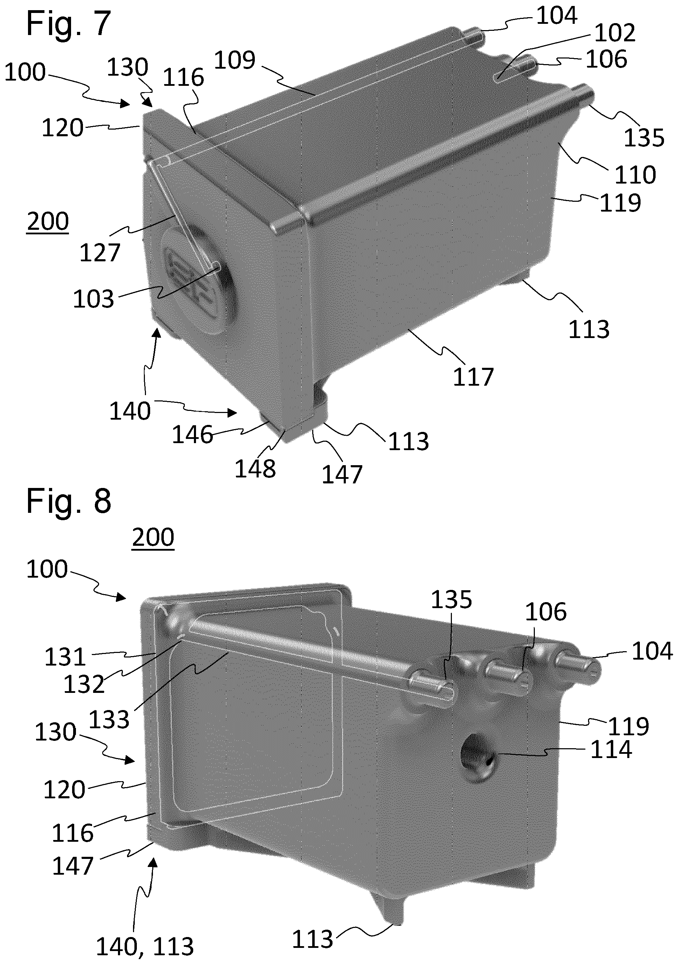

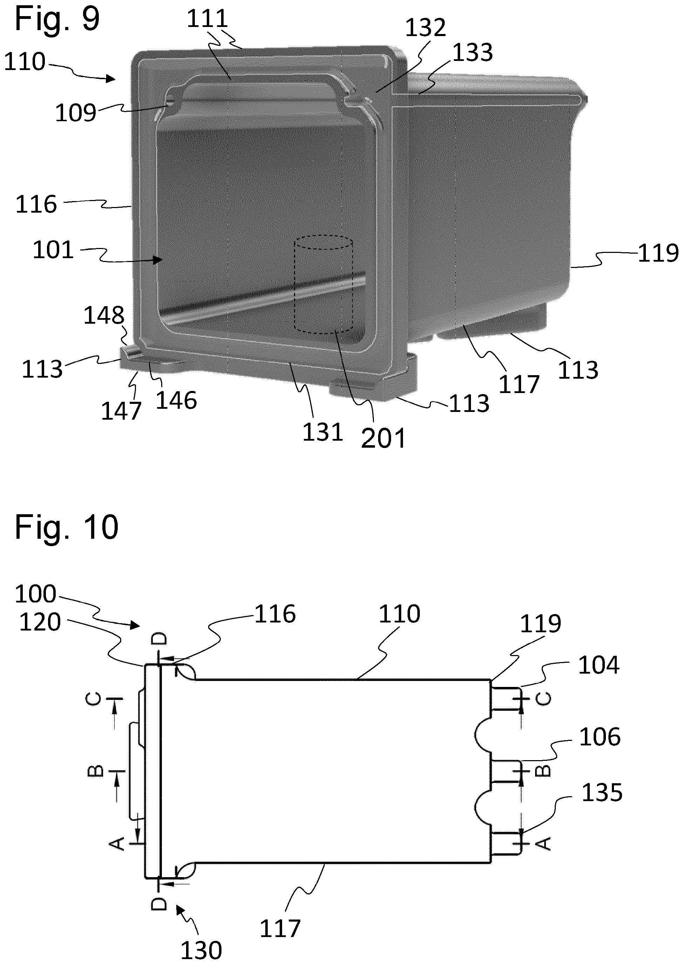

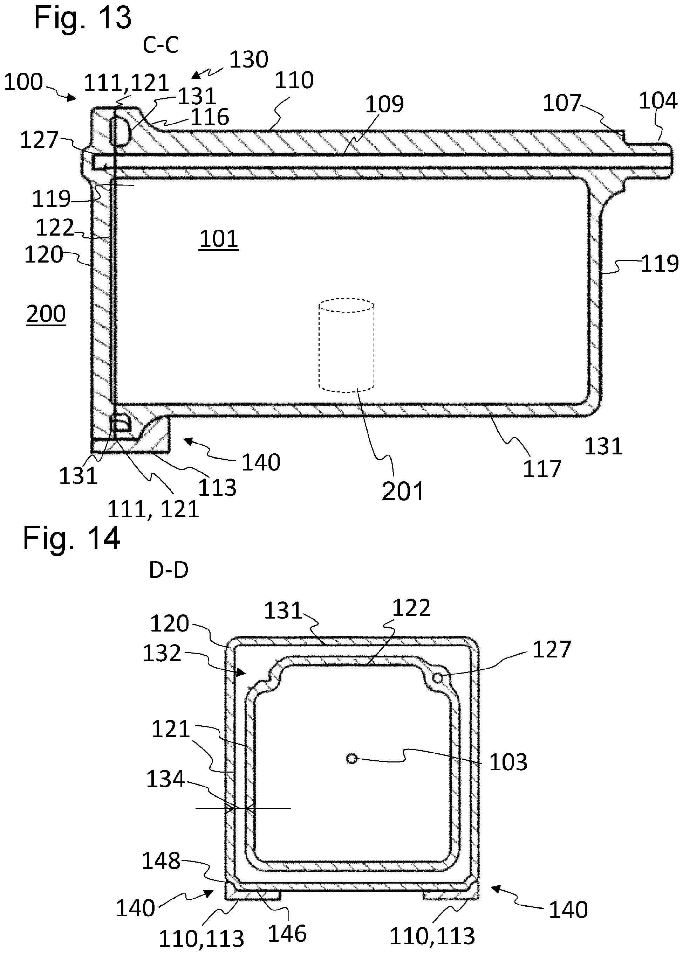

In den Fig. 7-9 sowie 15 sind im Inneren der Kammerbauteile 110, 120 verlaufende Leitungen 109, 127, 133 schematisch angedeutet, um den Verlauf nachvollziehen zu können. Für die Ausführungsformen der Fig. 7-14 werden insbesondere die Unterschiede gegenüber der Ausführung gemäß der Figuren 1-6 beschrieben.

Als Arretiereinrichtung 140 zum Arretieren und zum Zentrieren der Sinterofentür 120 weisen zwei, einstückig, fest verbunden oder lösbar mit der Sinterofenkammer 110 ausgebildete, Standfüße 113 im Bereich des Flansches 116 eine entsprechende Geometrie und Anordnung auf, sodass die Sinterofentür 120 auf die entsprechenden Standfüße 113 aufgestellt bzw. in die Standfüße 113 eingesetzt werden kann. Die Standfüße 113 der Arretiervorrichtung 140 weisen einen Vorsprung 147 auf, der im Bereich des Flansches 116 bzw. der Planfläche 111 übersteht. Eine (bezüglich der Schwerkraftrichtung) obere Fläche des Vorsprungs 147 bzw. des Überstandes ist als Aufstandsfläche 146 ausgebildet, auf welcher die Sinterofentür 120 abgestellt werden kann. Die Aufstandsfläche 146 weist Arretier- oder Zentrierrippen 148 oder -vorsprünge gegen seitliches verrutschen des Sinterofentür 120 auf. Die derart eingesetzte Sinterofentür 120 bedeckt die Öffnung des Sinterraums 101 und die Nut 131, insbesondere die Nut 131 der Sinterofenkammer 110, des Verbindungsbereichs 130 vollständig, wobei die Planflächen 111, 121 der Kammerbauteile 110, 120 formschlüssig aneinander anliegen. Damit kann bspw. durch Einschalten des ersten Verdichters ein Unterdruck in der Nut 131 erzeugt werden und die Sinterkammer 110,120 gegenüber der Umgebung 200 druckdicht und fluiddicht verschlossen werden. Das erste Kammerbauteil 110 weist hier ferner eine Schutzgasleitung 109 auf, durch welche Schutzgas für die Begasung des Sinterraums 101 mit Schutzgas geführt werden kann. Das Schutzgas wird dann hier durch einen Einlass 103 des zweiten Kammerbauteils 120 in den Sinterraum 101 geleitet. Die Anschlüsse für die Begasung 103 und Entgasung 102 von Schutzgas sind hier in verschiedenen Kammerbauteilen 110, 120 realisiert.

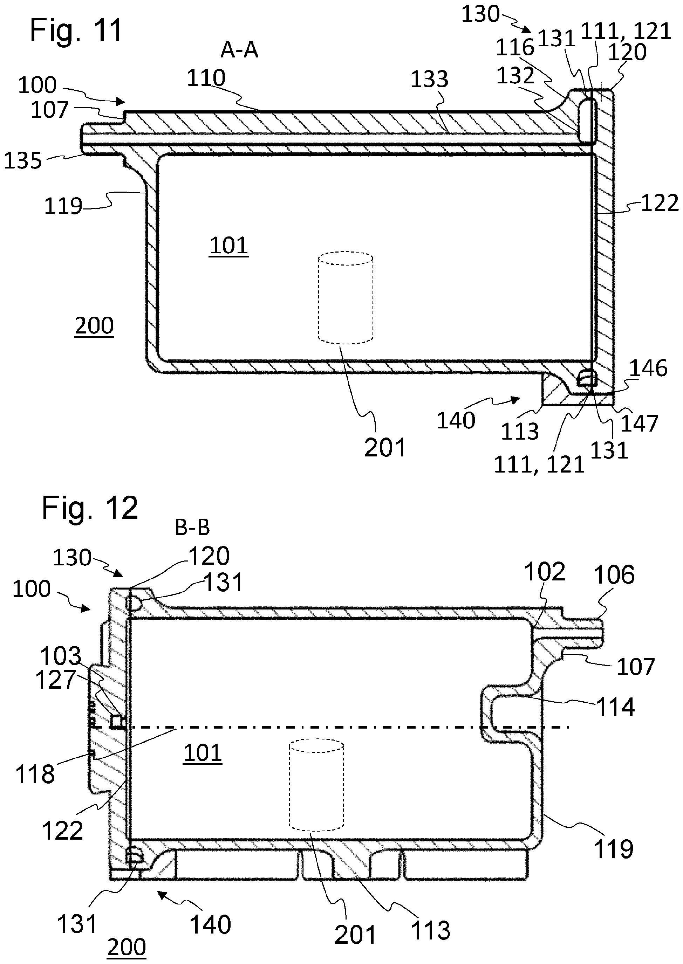

Wie in Fig. 8 und Fig. 12 zu sehen, weist die Rückwand 119 der sind der Ofenkammer 110 einen Zugang 114 für Messeinrichtungen, bspw. für Temperaturfühler (nicht dargestellt), auf. Der Zugang 114 ist als Sackgasse ausgebildet, sodass die Temperaturfühler nicht direkt in Kontakt mit dem Sinterraum 101 gelangen. Die Begasung des Sinterraums 101 mit Schutzgas ist in der zweiten Ausführungsform des Sinterofeneinsatzes 100 vereinfacht realisiert. Eine im zweiten Kammerbauteil 120 realisierte Schutzgasleitung oder Begasungsleitung 127 führt das Schutzgas von der Begasungsleitung oder Schutzgasleitung 109 des ersten Kammerbauteils zu einer als Schutzgaseinlass 103 ausgebildeten Öffnung im zweiten Kammerbauteils120. Die Anschlüsse für die Begasung 103 und Entgasung 102 von Schutzgas sind hier ebenfalls oberhalb einer Mittelebene 118 realisiert.

Wie in den Schnittdarstellungen A-A, B-B, C-C und D-D der Fig. 11-14 zu erkennen, weist das erste Kammerbauteil 110 und das zweite Kammerbauteil 120 eine entsprechende Nut 131 auf, wobei die Nuten 131, insbesondere deren Öffnungen, der beiden Kammerbauteile 110, 120 bei der Ausbildung des Unterdruckkanals komplementär oder kongruent aufeinander gelegt werden können. Die Planflächen 111 der Sinterofenkammer 110 begrenzen zu beiden Seiten die umlaufende Nut 131 der Sinterofenkammer 110. Dazu komplementär oder kongruent für den Formschluss ausgebildet sind die Planflächen 121 der Tür 120, welche zu beiden Seiten die umlaufende Nut 131 der Sinterofenkammer 110 begrenzen. Durch Ausbildung von Aussparungen bzw. Nuten 131 und beiden Kammerbauteilen 110, 120 kann einerseits das Volumen des Unterdruckkanals und damit die Verschlusskraft im Verbindungsbereich 130 gesteigert werden. Andererseits wird die nachzuschleifende Planfläche 111, 121 verringert, was den Wartungsaufwand reduziert.

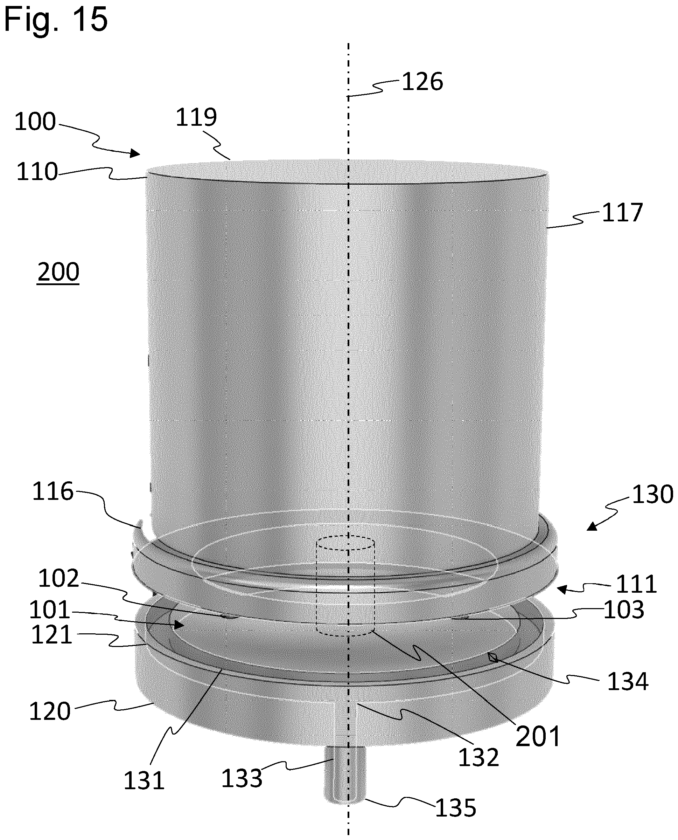

Fig. 15 zeigt einen Sinterofeneinsatz 100 zum sauerstofffreien Sintern in einer "runden" Ausführungsform mit einer verschließbaren Sinterkammer 110, 120 zur Aufnahme der sinterbaren Materialien während des Sintervorgangs. Das zweite Kammerbauteil 120 kann als Bodenplatte ausgebildet sein, auf welche das erste haubenartige Kammerbauteil 110, welches den Sinterraum 101 definiert, aufgesetzt wird. Die Sinterofenkammer 110 ist mit einem zylindrischen oder rohrförmigen 117 Abschnitt gebildet. Das zweite Kammerbauteil 120 weist einen Schutzgaseinlass 103 (Anschlussstutzen zu zweitem Schutzgasverdichter oder sonstiger Überdruckeinheit an Außenseite verdeckt) für die Begasung einen Schutzgasauslass 102 (Anschlussstutzen an Außenseite verdeckt) für dessen Entgasung auf. Die Anschlüsse für die Begasung 103 und Entgasung 102 von Schutzgas sind hier in demselben Kammerbauteil 120 realisiert. In einem bspw. kreisförmig um eine Mittelachse 126 umlaufenden Verbindungsbereich 130 zwischen dem ersten Kammerbauteil 110 und dem zweiten Kammerbauteil 120 ist in dem zweiten Kammerbauteil 120 eine ebenfalls kreisförmig umlaufende Nut 131 mit einer beispielhaften Breite 134 gebildet, wobei in der Nut 131 unabhängig vom Druck im Sinterraum 101 in der oder den Aussparungen 131, also der Nut 131, ein Unterdruck zur Bereitstellung einer Verschlusskraft erzeugt werden kann, um den Sinterraum 101 gegenüber der Umgebung 200 druckdicht und/oder fluiddicht zu verschließen. Der Verbindungsbereich 130 ist im geschlossenen Zustand durch die geschliffenen und/oder geläppten Planflächen 111,121 der Kammerbauteile 110,120 vom vom Sinterraum 101 baulich getrennt, sodass durch die dichtende Wirkung der Planflächen 111, 121 während der Bereitstellung des Unterdrucks in der Nut 131, der Sinterraum 101 gegenüber der oder den Aussparungen 131 und der Umgebung 200 druckdicht und/oder fluiddicht getrennt ist. Die Planfläche 111 wird durch die Auskragung des Flansches 116 gebildet, der an der Öffnung der Sinterofenkammer 110 angeordnet ist. Auch die Nut 131 weist, vorzugsweise in ihrer Bodenwandung 136 einen Unterdruckanschluss 132 auf, wobei die dort im Verbindungsbereich 130 mündende Unterdruckleitung 133 im Bereich den Sinterofeneinsatz 100 mit dem ersten Vakuumverdichter (nicht dargestellt) verbindet. Erforderliche Leitungen zum Verbinden mit dem ersten Vakuumverdichter (nicht dargestellt) können am Anschlussstutzen 135 angeschlossen werden.

### Bezugszeichenliste

- 100: Sinterofeneinsatz
- 101: Sinterraum
- 102: Auslass aus Sinterraum für Entgasung
- 103: Einlass für Begasung mit Schutzgas
- 104: erster Anschlussstutzen für Begasung mit Schutzgas
- 105: zweite Anschlussstutzen für Begasung oder Entgasung
- 106: Anschlussstutzen für Entgasung
- 107: Abstufung
- 108: Ringnut
- 109: erste Leitung für Begasung mit Schutzgas
- 110, 120: Sinterkammer, insbesondere Sinterofenkammer
- 110: erstes Kammerbauteil, insbesondere Sinterofenkammer
- 111: Planfläche
- 112: zweite Leitung für Begasung oder Entgasung mit Schutzgas
- 113: Standfüße
- 114: Zugang für Messeinrichtung
- 115: Fase
- 116: Flansch
- 117: Quader, insbesondere Schacht, oder Rohr
- 118: Mittelebene
- 119: Rückwand des ersten Kammerbauteils
- 120: zweites Kammerbauteil, insbesondere Sinterkammertür
- 121: Planfläche
- 122: Vertiefung
- 123: Verteilerkanal
- 124: Perforation
- 125: Zugang Verteilerkanal
- 126: Mittelachse
- 127: Begasungsleitung des zweiten Kammerbauteils
- 130: Verbindungsbereich
- 131: Aussparungen, insbesondere umlaufende Nut
- 132: Unterdruckanschluss, insbesondere Ansaugöffnung
- 133: Unterdruckleitung zum Verdichter
- 134: Nutbreite
- 135: Anschlussstutzen für Unterdruck oder ersten Verdichter
- 136: Bodenwandung der Aussparungen oder Nut
- 140: Zentrier- oder Arretiereinrichtung
- 141: Bolzen oder Zapfen
- 142: Öffnung für Bolzen oder Zapfen im zweiten Kammerbauteil
- 143: Öffnung für Bolzen oder Zapfen im ersten Kammerbauteil
- 144: erster Abschnitt der Anschlussstutzen
- 145: zweiter, abgestufter Abschnitt der Anschlussstutzen
- 146: Aufstandsfläche
- 147: Vorsprung
- 148: Arretier- oder Zentrierrippe
- 200: Umgebung
- 201: Sintergut, zu sinterndes Material, Bauteil, Werkstück

## Patentansprüche

1. Sinterofeneinsatz (100) zum sauerstofffreien Sintern von sinterbaren Materialien (201), insbesondere für die Dentaltechnik, aufweisend eine verschließbare Sinterkammer (110, 120) zur Ausbildung eines von einer Umgebung (200) abgeschlossenen Sinterraums (101) zur Aufnahme der sinterbaren Materialien (201) während des Sintervorgangs, wobei die Sinterkammer (110, 120) aufweist:
- einen Einlass (103) für die Begasung des Sinterraums (101) mit einem Schutzgas während des Sintervorgangs und mindestens einen Auslass (102) für dessen Entgasung,
- ein erstes Kammerbauteil, insbesondere eine Sinterofenkammer (110), und ein zweites Kammerbauteil, insbesondere eine Tür (120),
**dadurch gekennzeichnet, dass**
in einem umlaufenden Verbindungsbereich (130) zwischen dem ersten Kammerbauteil (110) und dem zweiten Kammerbauteil (120) ein oder mehrere Aussparungen (131) angeordnet sind,
wobei unabhängig vom Druck im Sinterraum (101) in der oder den Aussparungen (131) ein Unterdruck zur Bereitstellung einer Verschlusskraft erzeugt werden kann, um den Sinterraum (101) gegenüber der Umgebung (200) druckdicht und/oder fluiddicht zu verschließen.

2. Sinterofeneinsatz (100) nach Anspruch 1,
**dadurch gekennzeichnet, dass**
der Verbindungsbereich (130) vom Sinterraum (101) baulich getrennt ist, sodass durch die Bereitstellung des Unterdrucks in der oder den Aussparungen (131), der Sinterraum (101) gegenüber der oder den Aussparungen (131) und der Umgebung (200) druckdicht und/oder fluiddicht getrennt ist.

3. Sinterofeneinsatz (100) nach einem der Ansprüche 1 oder 2,
**dadurch gekennzeichnet, dass**
die Aussparung oder die Aussparungen (131) zum Erzeugen, Aufrechterhalten oder Lösen der Verschlusskraft durch eine oder mehrere Unterdruckleitungen (133) fluidleitend mit einem ersten Verdichter, insbesondere einem Vakuumverdichter oder Vakuumpumpe, zum Bereitstellen des Unterdrucks in der oder den Aussparungen (131) verbunden sind, wobei die Unterdruckleitungen (133) im Bereich von einem oder mehrerer Unterdruckanschlüsse (132) in den Verbindungsbereich (130) mündet.

4. Sinterofeneinsatz (100) nach einem der vorhergehenden Ansprüche,
**dadurch gekennzeichnet, dass**
der Sinterraum (101) zur Bereitstellung eines Überdrucks und/oder Unterdrucks im Sinterraum (101) mit einem zweiten Verdichter, insbesondere einer Schutzgaspumpe, oder sonstigen Überdruckeinheit zum Einleiten eines Schutzgases in den Sinterraum (101) verbunden oder verbindbar ist, wobei eine Schutzgasleitung (109, 112) den zweiten Verdichter oder die sonstige Überdruckeinheit mit dem Einlass (103) des Sinterraums (101) verbindet.

5. Sinterofeneinsatz (100) nach einem der vorhergehenden Ansprüche,
**dadurch gekennzeichnet, dass**
die Aussparung oder die Aussparungen (131) zur Ausbildung eines umlaufenden Unterdruckkanals oder einer umlaufenden Unterdruckleitung miteinander verbunden sind, wobei der umlaufende Kanal oder die umlaufende Leitung mit einer oder zwei oder mehr umlaufenden Nuten (131) gebildet ist.

6. Sinterofeneinsatz (100) nach einem der vorhergehenden Ansprüche,
**dadurch gekennzeichnet, dass**
der Verbindungsbereich (130) durch eine dem ersten Kammerbauteil (110) zugeordnete und eine dem zweiten Kammerbauteil (120) zugeordnete ebene, insbesondere geschliffene und/oder geläppte, Planfläche (111, 121) gebildet ist, wobei die Planflächen (111, 121) unter Ausbildung eines Formschlusses beim Erzeugen des Unterdrucks die Sinterkammer (110, 120) gegenüber der Umgebung (200) druckdicht und/oder fluiddicht verschließen können.

7. Sinterofeneinsatz (100) nach einem der vorhergehenden Ansprüche,
**dadurch gekennzeichnet, dass**
das erste Kammerbauteil (110) und das zweite Kammerbauteil (120) gegen ein unbeabsichtigtes Verrutschen oder Verdrehen zueinander durch eine Zentrier- oder Arretiereinrichtung (140) im Verbindungsbereich (130) gesichert sind.

8. Sinterofeneinsatz (100) nach Anspruch 7,
**dadurch gekennzeichnet, dass**
die Zentrier- oder Arretiereinrichtung (140) mindestens eine Aufstandsfläche (146) zum Aufsetzen eines Kammerbauteils (110, 120) aufweist, deren Geometrie und Anordnung derart angepasst ist, dass beim Anlegen oder Aufstellen eines Kammerbauteils (110, 120) der Sinterraum (101) und die Aussparungen (131) gegenüber der Umgebung (200) bedeckt oder abgedeckt sind.

9. Sinterofeneinsatz (100) nach einem der vorhergehenden Ansprüche,
**dadurch gekennzeichnet, dass**
der mindestens eine Einlass (103) für die Begasung des Sinterraums (101) und der mindestens eine Auslass (102) für dessen Entgasung an oder in demselben Kammerbauteil (110, 120) angeordnet oder anordenbar sind.

10. Sinterofeneinsatz (100) nach einem der vorhergehenden Ansprüche,
**dadurch gekennzeichnet, dass**
mindestens ein Einlass (103) für die Begasung des Sinterraums (101) und mindestens ein Auslass (102) für dessen Entgasung an oder in verschiedenen Kammerbauteilen (110, 120) angeordnet oder anordenbar sind.

11. Sinterofeneinsatz (100) nach einem der vorhergehenden Ansprüche,
**dadurch gekennzeichnet, dass**
der mindestens eine Einlass (103) für die Begasung des Sinterraums (101) und der mindestens eine Auslass (102) für dessen Entgasung in einem oberen Bereich des Sinterraums (101) oder oberhalb des zu sinternden Materials (201) angeordnet oder anordenbar sind.

12. Sinterofeneinsatz (100) nach einem der vorhergehenden Ansprüche,
**dadurch gekennzeichnet, dass**
das erste Kammerbauteil (110) als Sinterofenkammer den verschließbaren Sinterraum (101) definiert und das zweite Kammerbauteil (120) als Ofenkammertür zum Verschließen des Sinterraums (101) ausgebildet ist.

13. Sinterofeneinsatz (100) nach einem der vorhergehenden Ansprüche,
**dadurch gekennzeichnet, dass**
das erste Kammerbauteil (110) und das zweite Kammerbauteil (120) mittels 3D-Druckverfahren hergestellt sind, wobei das 3D-Druckverfahren die Verwendung von Siliciumcarbid umfasst.

14. Sinterofen mit einem Sinterofeneinsatz (100) zum sauerstofffreien Sintern von sinterbaren Materialien (201), insbesondere für die Dentaltechnik, nach einem der vorhergehenden Ansprüche, .

15. Verwendung eines Sinterofeneinsatz (100) zum sauerstofffreien Sintern von sinterbaren Materialien (201), insbesondere für die Dentaltechnik, nach einem der vorhergehenden Ansprüche, in einem Sinterofen.
